# EUROPÄISCHE PATENTANMELDUNG

(11) **EP 4 782 942 A1**
(43) Veröffentlichungstag der Anmeldung: **29.07.2026**
(21) Anmeldenummer: 25153340.2
(22) Anmeldetag: 22.01.2025
(51) Int. Cl.: G05B 13/02, G05B 13/04, B25J 9/16

(54) **VERFAHREN ZUM REGELN EINES TECHNISCHEN SYSTEMS**

(71) Anmelder: Robert Bosch GmbH, 70442 Stuttgart (DE)
(72) Erfinder: Giani, Marco, 70197 Stuttgart (DE); Pazzaglia, Paolo, 72072 Tuebingen (DE); Mark, Christoph, 67575 Eich (DE)

(57) **Zusammenfassung**

Die Erfindung betrifft ein Verfahren zum Regeln eines technischen Systems. Ferner betrifft die Erfindung ein Computerprogramm, eine Vorrichtung sowie ein Speichermedium zu diesem Zweck.

## Beschreibung

Die Erfindung betrifft ein Verfahren zum Regeln eines technischen Systems. Ferner betrifft die Erfindung ein Computerprogramm, eine Vorrichtung sowie ein Speichermedium zu diesem Zweck.

### Stand der Technik

In einem vernetzten Regelungssystem wird ein technisches System oder ein Prozess gesteuert, indem Daten von einem oder mehreren Sensoren über ein Kommunikationsnetzwerk an einen periodischen Regelungsalgorithmus gesendet werden, der sich auf einer externen Datenverarbeitungsvorrichtung befindet und dann eine Regelungs-Eingabe an (einen) lokale(n) Aktor(en) zurücksendet. Eine große Herausforderung bei dieser Art von Architektur ist der Umgang mit Verzögerungen, die während der Kommunikation der Regelungs-Eingabe in der Kette zwischen dem/den Sensor(en), der externen Datenverarbeitungsvorrichtung und dem/den Aktor(en) auftreten. Insbesondere wenn diese Verzögerung zeitvariabel ist (d. h. sich im Laufe der Zeit ändert), kann sie einen starken Einfluss auf die Stabilität des Regelkreises haben.

Wenn die Verzögerung größer ist als erwartet (oder eine Nachricht nicht erfolgreich übermittelt wird, d.h. ein Paketverlust auftritt), kann es sein, dass der Aktor die aktualisierte Regelungs-Eingabe nicht innerhalb der vorgesehenen Frist erhält. Daher muss er eine alternative Maßnahme ergreifen, um den Datenverlust auszugleichen. Die klassischen Ansätze für dieses Problem beruhen auf der Verwendung einfacher Rückfallstrategien auf Aktor-Ebene, wie z.B. das Beibehalten des im vorherigen Schritt angewendeten Werts oder das Anwenden eines Standardwerts (beispielsweise Null).

Diese einfachen Strategien haben den Vorteil, dass sie sich leicht umsetzen und analysieren lassen, können jedoch zu unerwünschten Verhaltensweisen führen, insbesondere bei mehrfacher verzögerter Kommunikation während vorübergehender Bedingungen (z.B. größere Überschwinger bei Beibehaltung einer großen Regelungs-Eingabe, abruptes Anhalten bei Nullstellung von einem zuvor nicht nullstelligen Regelungs-Eingabe).

### Offenbarung der Erfindung

Gegenstand der Erfindung ist ein Verfahren mit den Merkmalen des Anspruchs 1, ein Computerprogramm mit den Merkmalen des Anspruchs 8, eine Vorrichtung mit den Merkmalen des Anspruchs 9 sowie ein
computerlesbares Speichermedium mit den Merkmalen des Anspruchs 10. Weitere Merkmale und Details der Erfindung ergeben sich aus den jeweiligen Unteransprüchen, der Beschreibung und den Zeichnungen. Dabei gelten Merkmale und Details, die im Zusammenhang mit dem erfindungsgemäßen Verfahren beschrieben sind, selbstverständlich auch im Zusammenhang mit dem erfindungsgemäßen Computerprogramm, der erfindungsgemäßen Vorrichtung sowie dem erfindungsgemäßen computerlesbaren Speichermedium, und jeweils umgekehrt, so dass bezüglich der Offenbarung der Erfindung stets auch eine wechselseitige Bezugnahme möglich ist.

Gegenstand der Erfindung ist insbesondere ein Verfahren zum Regeln eines technischen Systems, umfassend:
- Bereitstellen von Sensordaten, wobei die Sensordaten aus einer Erfassung wenigstens eines Sensors des technischen Systems resultieren, wobei die Sensordaten im Rahmen des Bereitstellens beispielsweise durch den wenigstens einen Sensor erfasst und vorzugsweise ferner durch eine lokale Datenverarbeitungsvorrichtung des technischen Systems an eine externe Datenverarbeitungsvorrichtung übermittelt werden, beispielsweise über ein Kommunikationsnetzwerk,
- Initiieren eines Durchführens einer Regelungsfunktion auf Basis der bereitgestellten Sensordaten, insbesondere durch eine/die externe Datenverarbeitungsvorrichtung, um eine Regelungs-Eingabe für einen nächsten Zeitschritt für wenigstens einen Aktor, bzw. für eine Regelung oder Steuerung des wenigstens einen Aktors, des technischen Systems zu bestimmen, wobei die Regelungsfunktion ein beliebiger Regelungsalgorithmus sein kann, beispielsweise eine Abstandsregelung für ein Fahrzeug als technisches System,
- Ermitteln einer erwarteten Regelungs-Eingabe für den nächsten Zeitschritt für den wenigstens einen Aktor, bzw. für eine/die Regelung oder Steuerung des wenigstens einen Aktors, des technischen Systems auf Basis einer Korrelation zwischen vergangenen Sensordaten und korrespondierenden vergangenen Regelungs-Eingaben, vorzugsweise unter Verwendung eines Vorhersagemodells, insbesondere eines Maschinenlernmodells, wobei das Vorhersagemodell auf der lokalen Datenverarbeitungsvorrichtung bereitgestellt sein kann, wobei die Korrelation beispielsweise im Rahmen eines Trainings oder eines vergleichbaren Lernverfahrens durch das Vorhersagemodell erlernt werden oder erlernt worden sein kann,
- Prüfen, ob die Regelungs-Eingabe innerhalb eines definierten Zeitfensters nach dem Initiieren des Durchführens der Regelungsfunktion empfangen wurde und/oder verfügbar ist, insbesondere durch die lokale Datenverarbeitungsvorrichtung, wobei das definierte Zeitfenster insbesondere einer Periode, bzw. einer Zeitspanne einer Iteration, der Regelungsfunktion entspricht.

Im Falle, dass die Regelungs-Eingabe innerhalb des definierten Zeitfensters empfangen wurde und/oder verfügbar ist, kann vorgesehen sein, dass die Regelungs-Eingabe für eine/die Regelung/Steuerung des wenigstens einen Aktors verwendet wird. Dies würde insbesondere einem regulären Fall entsprechen, bei dem keine, bzw. keine zu große, Verzögerung entstanden ist, beispielsweise im Rahmen der Kommunikation mit der externen Datenverarbeitungsvorrichtung über das Kommunikationsnetzwerk. Im Falle, dass die Regelungs-Eingabe nicht innerhalb des definierten Zeitfensters empfangen wurde und/oder verfügbar ist, kann vorgesehen sein, dass die erwartete Regelungs-Eingabe für die Regelung/Steuerung des wenigstens einen Aktors verwendet wird. Dies würde insbesondere einem Fall entsprechen, in dem die Regelungs-Eingabe erst verzögert empfangen wird und somit erst verzögert für die Regelung/Steuerung des wenigstens einen Aktors verfügbar ist. Vereinfacht ausgedrückt kann durch die erwartete Regelungs-Eingabe vorteilhaft ein präziseres Aktor-Verhalten vorgegeben werden, wenn keine Regelungs-Eingabe zur Verfügung steht, beispielsweise wenn eine Verzögerung zwischen der externen Datenverarbeitungsvorrichtung und der lokalen Datenverarbeitungsvorrichtung oder ein Fehler in der externen Datenverarbeitungsvorrichtung bei dem Durchführen der Regelungsfunktion auftritt.

Es kann im Rahmen der Erfindung vorgesehen sein, dass das Ermitteln durch ein Vorhersagemodell, insbesondere ein Maschinenlernmodell, durchgeführt wird und das Verfahren ferner umfasst:
- Trainieren des Vorhersagemodells auf Basis eines Trainingsdatensatzes, wobei der Trainingsdatensatz die vergangenen Sensordaten und die korrespondierenden vergangenen Regelungs-Eingaben umfasst, wobei das Vorhersagemodell trainiert wird, um auf Basis von gegebenen Sensordaten eine entsprechende korrespondierende Regelungs-Eingabe für einen gegebenen nächsten Zeitschritt zu prädizieren.

Im Rahmen des Trainings kann eine Verlustfunktion verwendet werden, mithilfe welcher eine Differenz zwischen einer jeweils durch das Vorhersagemodell, bzw. Maschinenlernmodell, erwartete Regelungs-Eingabe auf Basis jeweiliger vergangener Sensordaten und einer jeweiligen korrespondierenden vergangenen Regelungs-Eingabe minimiert wird. Die korrespondierenden vergangenen Regelungs-Eingaben können im Rahmen des Trainings entsprechend als Ground Truth Daten verwendet werden. Es kann auch vorgesehen sein, dass das Trainieren des Vorhersagemodells ferner auf Basis von vergangenen Verzögerungen zwischen dem Initiieren des Durchführens der Regelungsfunktion und einem Empfangen der bestimmten Regelungs-Eingabe (wie nachstehend erwähnt) durchgeführt wird, um auf Basis von gegebenen Sensordaten und einer gegebenen Verzögerung die entsprechende korrespondierende Regelungs-Eingabe für den gegebenen nächsten Zeitschritt zu prädizieren.

Von weiterem Vorteil kann vorgesehen sein, dass das Verfahren ferner umfasst:
- Initiieren eines Speicherns der bereitgestellten Sensordaten und der bestimmten Regelungs-Eingabe, beispielsweise in einem entsprechenden Speicher einer/der externen Datenverarbeitungsvorrichtung,
- Initiieren eines Modifizierens, insbesondere eines erneuten Trainierens, des Vorhersagemodells auf Basis der gespeicherten Sensordaten und der gespeicherten Regelungs-Eingabe, insbesondere durch die externe Datenverarbeitungsvorrichtung.

Dadurch kann vorteilhaft auf Veränderungen reagiert werden und es kann ein dynamisches Vorhersagemodell bereitgestellt werden, welches fortlaufend angepasst wird.

In einer weiteren Möglichkeit kann vorgesehen sein, dass das Bereitstellen der Sensordaten, das Ermitteln der erwarteten Regelungs-Eingabe, das Prüfen und/oder das Verwenden der Regelungs-Eingabe für die Regelung des wenigstens einen Aktors durch eine/die lokale Datenverarbeitungsvorrichtung des technischen Systems durchgeführt werden. Vorzugsweise wird das Ermitteln der erwarteten Regelungs-Eingabe ausschließlich auf der lokalen Datenverarbeitungsvorrichtung durchgeführt. Auch das Initiieren des Durchführens der Regelungsfunktion kann durch die lokale Datenverarbeitungsvorrichtung durchgeführt werden.

Das Durchführen der Regelungsfunktion, und vorzugsweise ferner das Trainieren des Vorhersagemodells, das Speichern und/oder das Modifizieren, bzw. das erneute Trainieren, können durch eine/die externe Datenverarbeitungsvorrichtung durchgeführt werden.

Dabei stehen die lokale Datenverarbeitungsvorrichtung und die externe Datenverarbeitungsvorrichtung insbesondere über ein (drahtloses) Kommunikationsnetzwerk miteinander in Kommunikation, bzw. in Verbindung.

Ferner wird vorzugsweise sowohl auf der lokalen Datenverarbeitungsvorrichtung als auch auf der externen Datenverarbeitungsvorrichtung ein jeweiliges Vorhersagemodell verwendet, und insbesondere auch initial bereitgestellt. Diese Vorhersagemodelle können sich unterscheiden, da das Vorhersagemodell der externen Datenverarbeitungsvorrichtung vorzugsweise fortlaufend modifiziert, bzw. erneut trainiert, wird. Es kann jeweils ein Angleichen der beiden Vorhersagemodelle im Rahmen des Aktualisierens des Vorhersagemodells auf der lokalen Datenverarbeitungsvorrichtung auf Basis des Vorhersagemodells der externen Datenverarbeitungsvorrichtung erfolgen, wie nachstehend beschrieben.

Durch die Verwendung der externen Datenverarbeitungsvorrichtung kann beispielsweise vorteilhaft eine Rechenleistung zum Trainieren und Modifizieren, bzw. erneuten Trainieren, des Vorhersagemodells ausgelagert werden. Dadurch kann die lokale Datenverarbeitungsvorrichtung vorteilhaft auch mit weniger Rechenleistung auskommen, da diese das Vorhersagemodell insbesondere lediglich zum Ermitteln der erwarteten Regelungs-Eingabe verwenden kann.

Gemäß einem weiteren Vorteil kann vorgesehen sein, dass das Verfahren ferner umfasst:
- Initiieren eines Aktualisierens des Vorhersagemodells auf der lokalen Datenverarbeitungsvorrichtung auf Basis des Vorhersagemodells der externen Datenverarbeitungsvorrichtung, wobei das Aktualisieren periodisch nach einer jeweiligen definierten Zeitspanne initiiert wird.

Alternativ kann das Aktualisieren auch nach einer jeweiligen definierten Anzahl an Iterationen der Regelungsfunktion durchgeführt werden. Das Aktualisieren kann beispielsweise ein Übersenden von Parametern des Vorhersagemodells oder auch des gesamten Vorhersagemodells von der externen Datenverarbeitungsvorrichtung an die lokale Datenverarbeitungsvorrichtung umfassen, um dort als Vorhersagemodell verwendet zu werden, d.h. insbesondere das veraltete Vorhersagemodell der lokalen Datenverarbeitungsvorrichtung zu ersetzen. So kann vorteilhaft das Vorhersagemodell der lokalen Datenverarbeitungsvorrichtung auf einen aktuellen Stand gebracht werden, insbesondere da das Vorhersagemodell der externen Datenverarbeitungsvorrichtung laufend auf Basis aktueller Sensordaten modifiziert, bzw. erneut trainiert, wird.

Gemäß einer vorteilhaften Weiterbildung der Erfindung kann vorgesehen sein, dass das Verfahren ferner umfasst:
- Vergleichen einer Differenz zwischen der Regelungs-Eingabe und der erwarteten Regelungs-Eingabe mit einem definierten Schwellwert,
- Initiieren eines Aktualisierens des Vorhersagemodells auf der lokalen Datenverarbeitungsvorrichtung auf Basis des Vorhersagemodells der externen Datenverarbeitungsvorrichtung, wenn die Differenz größer als der definierte Schwellwert ist.

So kann vorteilhaft schnell auf starke systematische Änderungen der Sensordaten reagiert werden, die in dem Vorhersagemodell der externen Datenverarbeitungsvorrichtung bereits berücksichtigt sind. Parameter dieses Vorhersagemodells der externen Datenverarbeitungsvorrichtung oder auch das gesamte Vorhersagemodell der externen Datenverarbeitungsvorrichtung können/kann entsprechend im Rahmen des Aktualisierens an die lokale Datenverarbeitungsvorrichtung übertragen werden, um dort als Vorhersagemodell verwendet zu werden, d.h. insbesondere das veraltete Vorhersagemodell der lokalen Datenverarbeitungsvorrichtung zu ersetzen.

Weiter ist im Rahmen der Erfindung denkbar, dass das Verfahren ferner umfasst:
- Ermitteln einer Verzögerung zwischen dem Initiieren des Durchführens der Regelungsfunktion und einem Empfangen der bestimmten Regelungs-Eingabe,
wobei das Ermitteln der erwarteten Regelungs-Eingabe für den nächsten Zeitschritt für den wenigstens einen Aktor des technischen Systems unter Verwendung des Vorhersagemodells ferner auf Basis der ermittelten Verzögerung durchgeführt wird, wobei das Vorhersagemodell die erwartete Regelungs-Eingabe auf Basis einer Korrelation zwischen vergangenen Sensordaten, vergangenen Verzögerungen und korrespondierenden vergangenen Regelungs-Eingaben ermittelt. Die bestimmte Regelungs-Eingabe wird dabei insbesondere durch die lokale Datenverarbeitungsvorrichtung empfangen und das Ermitteln der Verzögerung sowie auch das Initiieren des Durchführens der Regelungsfunktion wird entsprechend vorzugsweise auch durch die lokale Datenverarbeitungsvorrichtung durchgeführt. So kann vorteilhaft ein differenzierteres und präziseres Ermitteln der erwarteten Regelungs-Eingabe durch das Vorhersagemodell erfolgen, da ferner der weitere Faktor der Verzögerung berücksichtigt wird.

Es ist möglich, dass das erfindungsgemäße Verfahren bei einem Fahrzeug zum Einsatz kommt. Das Fahrzeug kann bspw. als ein Kraftfahrzeug und/oder Personenkraftfahrzeug und/oder zumindest teilweise automatisiertes/autonomes Fahrzeug ausgebildet sein. Das Fahrzeug kann eine Fahrzeugeinrichtung, bspw. zur Bereitstellung einer autonomen Fahrfunktion und/oder ein Fahrerassistenzsystem aufweisen. Die Fahrzeugeinrichtung kann dazu ausgeführt sein, das Fahrzeug zumindest teilweise automatisch zu steuern und/oder zu beschleunigen und/oder abzubremsen und/oder zu lenken.

Ebenfalls Gegenstand der Erfindung ist ein Computerprogramm, insbesondere Computerprogrammprodukt, umfassend Befehle, die bei der Ausführung des Computerprogrammes durch wenigstens einen Computer diesen veranlassen, das erfindungsgemäße Verfahren auszuführen. Damit bringt das erfindungsgemäße Computerprogramm die gleichen Vorteile mit sich, wie sie ausführlich mit Bezug auf ein erfindungsgemäßes Verfahren beschrieben worden sind.

Ebenfalls Gegenstand der Erfindung ist eine Vorrichtung zur Datenverarbeitung, die eingerichtet ist, das erfindungsgemäße Verfahren auszuführen. Als die Vorrichtung kann bspw. wenigstens ein Computer vorgesehen sein, welcher das erfindungsgemäße Computerprogramm ausführt. Der Computer kann wenigstens einen Prozessor zur Ausführung des Computerprogramms aufweisen. Auch kann ein nicht-flüchtiger Datenspeicher vorgesehen sein, in welchem das Computerprogramm hinterlegt und von welchem das Computerprogramm durch den Prozessor zur Ausführung ausgelesen werden kann.

Ebenfalls Gegenstand der Erfindung kann ein computerlesbares Speichermedium sein, welches das erfindungsgemäße Computerprogramm aufweist und/oder Befehle umfasst, die bei der Ausführung durch wenigstens einen Computer diesen veranlassen, das erfindungsgemäße Verfahren auszuführen. Das Speichermedium ist bspw. als ein Datenspeicher wie eine Festplatte und/oder ein nicht-flüchtiger Speicher und/oder eine Speicherkarte ausgebildet. Das Speichermedium kann z. B. in den Computer integriert sein.

Darüber hinaus kann das erfindungsgemäße Verfahren auch als ein computerimplementiertes Verfahren ausgeführt sein. Alternativ oder zusätzlich kann zumindest einer der offenbarten Verfahrensschritte computer-implementiert sein und/oder automatisiert durchgeführt werden.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen:
- Fig. 1: eine schematische Visualisierung eines Verfahrens, einer Vorrichtung, eines Speichermediums sowie eines Computerprogramms gemäß Ausführungsbeispielen der Erfindung,
- Fig. 2: eine schematische Darstellung von Komponenten zur Ausführung eines Verfahrens gemäß Ausführungsbeispielen der Erfindung,
- Fig. 3: eine schematische Darstellung eines Verfahrens gemäß Ausführungsbeispielen der Erfindung.

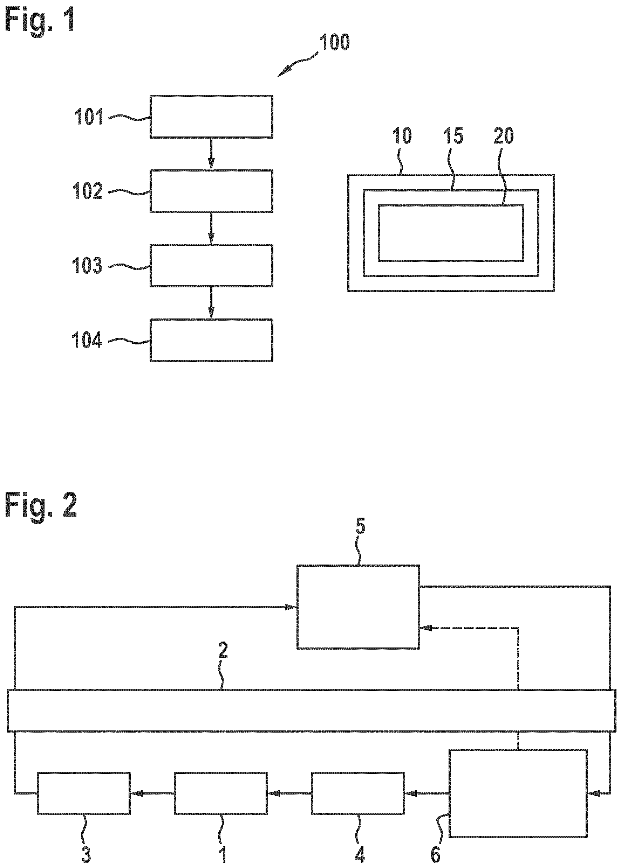

In Fig. 1 sind ein Verfahren 100, eine Vorrichtung 10, ein Speichermedium 15 sowie ein Computerprogramm 20 gemäß Ausführungsbeispielen der Erfindung schematisch dargestellt.

Fig. 1 zeigt insbesondere ein Ausführungsbeispiel für ein Verfahren 100 zum Regeln eines technischen Systems 1. In einem ersten Schritt 101 werden Sensordaten bereitgestellt, wobei die Sensordaten aus einer Erfassung wenigstens eines Sensors 3 des technischen Systems 1 resultieren. In einem zweiten Schritt 102 wird ein Durchführen einer Regelungsfunktion auf Basis der bereitgestellten Sensordaten initiiert, um eine Regelungs-Eingabe für einen nächsten Zeitschritt für wenigstens einen Aktor 4 des technischen Systems 1 zu bestimmen. In einem dritten Schritt 103 wird eine erwartete Regelungs-Eingabe für den nächsten Zeitschritt für den wenigstens einen Aktor 4 des technischen Systems 1 auf Basis einer Korrelation zwischen vergangenen Sensordaten und korrespondierenden vergangenen Regelungs-Eingaben ermittelt. In einem vierten Schritt 104 wird geprüft, ob die Regelungs-Eingabe innerhalb eines definierten Zeitfensters nach dem Initiieren des Durchführens der Regelungsfunktion verfügbar ist. Im Falle, dass die Regelungs-Eingabe innerhalb des definierten Zeitfensters verfügbar ist, wird die Regelungs-Eingabe für eine Regelung des wenigstens einen Aktors 4 verwendet. Im Falle, dass die Regelungs-Eingabe nicht innerhalb des definierten Zeitfensters verfügbar ist, wird die erwartete Regelungs-Eingabe für die Regelung des wenigstens einen Aktors 4 verwendet.

Um die unerwünschten Auswirkungen vereinfachter Halte- oder Nullstrategien zu reduzieren, wird gemäß Ausführungsbeispielen der Erfindung insbesondere ein lernbasiertes Aktor-Verhalten bereitgestellt, bei dem ein Vorhersagemodell auf Aktor-Ebene implementiert wird. Im Falle einer fehlenden (oder nicht rechtzeitigen) Ankunft einer Regelungs-Eingabe wird das lernbasierte Aktor-Verhalten vorzugsweise aktiviert, indem ein Ausgang des Vorhersagemodells als eine "wahrscheinlichste" erwartete Regelungs-Eingabe ausgewählt wird, basierend auf erlernten Mustern, bzw. einer erlernten Korrelation.

Das Vorhersagemodell kann ein neuronales Netz oder ein ähnliches auf künstlicher Intelligenz basierendes Maschinenlernmodell sein, das als Eingabe einen Vektor vergangener Regelungs-Eingaben (optional auch entsprechende vergangene Sensordaten, d. h. eine Ausgabe des technischen Systems 1, und vergangene Verzögerungsmessungen) verwendet und die erwartete Regelungs-Eingabe für einen nächsten Zeitschritt ermittelt. Die Lernphase, bzw. das Training, des Vorhersagemodells wird vorzugsweise auf einer externen Datenverarbeitungsvorrichtung 5 durchgeführt, indem ein Trainingsdatensatz mehrerer Muster zuvor berechneter Regelungs-Eingaben (optional auch entsprechende Sensordaten und Verzögerungsmessungen) gesammelt werden. Ein erstes Lernen, bzw. Trainieren, erfolgt beispielsweise in einer Entwurfsphase des technischen Systems 1. Anschließend kann ein Modifizieren, bzw. erneutes Trainieren, durchgeführt werden, um Parameter des Vorhersagemodells zur Laufzeit zu aktualisieren. Die Aktualisierung des Vorhersagemodells kann durch eine Auslösebedingung angefordert oder periodisch durchgeführt werden. Das Vorhersagemodell kann dann an den wenigstens einen Aktor 4 gesendet werden, der es verwendet, um die erwartete Regelungs-Eingabe zu generieren, wenn die Kommunikation der Regelungs-Eingabe von der externen Datenverarbeitungsvorrichtung 5 verzögert wird oder ausfällt.

Das lernbasierte Aktor-Verhalten gemäß der Erfindung kann die Verzögerung oder den Verlust von Daten ausgleichen, die während anomaler (nicht permanenter) Kommunikationsnetzwerkbedingungen auftreten. Die vom Vorhersagemodell ermittelte erwartete Regelungs-Eingabe ist insbesondere eng mit einem aktuellen Muster verbunden und kann ein natürlicheres Verhalten des geregelten technischen Systems 1 im Falle vorübergehender Bedingungen mit hohen Verzögerungen im Kommunikationsnetzwerk oder Paketverlusten ermöglichen. Durch das lernbasierte Aktor-Verhalten gemäß der Erfindung kann eine Regelleistung im Vergleich zu den vereinfachten Null- oder Halte-Strategien verbessert werden, da das lernbasierte Aktor-Verhalten dynamischer und anpassungsfähiger ist.

Die iterative Aktualisierung des Vorhersagemodells kann nützlich sein, um sich an nicht modellierte oder unvorhergesehene Verhaltensweisen des technischen Systems 1 (z. B. aufgrund von Alterung der Aktoren oder Änderungen der Parameter des technischen Systems 1) oder sich ändernde exogene Bedingungen anpassen zu können. Darüber können dadurch, dass die Anpassung und Aktualisierung des Vorhersagemodells in der externen Datenverarbeitungsvorrichtung 5 anstelle auf lokaler Ebene durchgeführt werden, wertvolle Rechenressourcen eingespart werden, wenn die lokale Datenverarbeitungsvorrichtung 6 nur über begrenzte Rechenressourcen verfügt oder wenn proprietäre Betriebssysteme oder Treiber (z. B. EtherCAT-Feldbus) eine Offenheit in Bezug auf Programmieroptionen einschränken.

Die Verwendung eines Vorhersagemodells kann auch eine späte Überprüfung ermöglichen, indem das aktuelle Verhalten mit dem vorhergesagten verglichen wird und fortschrittlichere Kompensationsmechanismen ausgelöst werden, z. B. für Sicherheits- und Schutzprobleme, die in anderen Teilen des technischen Systems 1 auftreten können.

Die Erfindung kann während einer Entwurfsphase des technischen Systems 1 verwendet werden, d. h. wenn das technische System 1 noch nicht gebaut wurde. Das Vorhersagemodell kann dabei aus einer Sammlung von Regelungs-Eingaben erstellt und dann in der lokalen Datenverarbeitungsvorrichtung 6 (und vorzugsweise auch in der externen Datenverarbeitungsvorrichtung 5) gespeichert werden, um das lernbasierte Aktor-Verhalten durchzuführen.

Die Erfindung kann ferner für eine Weiterentwicklung eines bereits bestehenden realen technischen Systems 1 verwendet werden. In einer bereits bestehenden vernetzten Regelung, die bei fehlender Regelungs-Eingabe eine Null-/Halte-Strategie verwendet, kann das Vorhersagemodell der lokalen Datenverarbeitungsvorrichtung 6 hinzugefügt werden, das als neue Strategie das lernbasierte Aktor-Verhalten implementiert. Auf der externen Datenverarbeitungsvorrichtung 5 kann der Lernalgorithmus gemäß der Erfindung hinzugefügt werden, um das Vorhersagemodell zu aktualisieren.

Die Erfindung kann zudem verwendet werden, um direkt mit dem technischen System 1 zu interagieren, d. h. sie kann direkt das Verhalten des technischen Systems 1 beeinflussen. Das lernbasierte Aktor-Verhalten hat insbesondere einen direkten Einfluss auf das technische System 1, z. B. können sicherheitskritische Eigenschaften beeinflusst werden.

Gemäß Ausführungsbeispielen der Erfindung wird ein lernbasiertes Aktor-Verhalten beschrieben, bei dem ein Vorhersagemodell verwendet wird, um eine erwartete aktuelle Regelungs-Eingabe zu ermitteln, die als lernbasiertes Aktor-Verhalten auf einen oder mehrere Aktoren 4 angewendet werden kann, falls eine an einer externen Datenverarbeitungsvorrichtung 5 berechnete aktuelle Regelungs-Eingabe nicht innerhalb einer erwarteten Frist an einer lokalen Datenverarbeitungsvorrichtung 6 eintrifft.

Das Vorhersagemodell verwendet als Eingabe insbesondere eine Sequenz von N vorhergehenden Regelungs-Eingaben (optional auch entsprechende Sensordaten und Verzögerungsmessungen) und gibt als Ausgabe vorzugsweise die erwartete Regelungs-Eingabe für einen nächsten Zeitschritt aus. Das Vorhersagemodell kann an sich ändernde Bedingungen angepasst werden, indem es zur Laufzeit mithilfe von vergangenen Daten, die von der externen Datenverarbeitungsvorrichtung 5 gesammelt wurden, erneut trainiert und aktualisiert wird.

Gemäß Ausführungsbeispielen können im Rahmen des Verfahrens beispielsweise die folgenden Komponenten verwendet werden, (vgl. Fig. 2): Ein technisches System 1 wie eine Anlage oder ein Prozess, der gesteuert werden soll. Ein Kommunikationsnetzwerk 2, das eine Kommunikation zwischen einer externen Datenverarbeitungsvorrichtung 5 und einer lokalen Datenverarbeitungsvorrichtung 6 bereitstellt. Wenigstens ein Sensor 3 tastet vorzugsweise regelmäßig (insbesondere mit der Periode *Ts*) physikalische Eigenschaften des technischen Systems 1 ab. Die abgetasteten Sensordaten des wenigstens einen Sensors 3 werden vorzugsweise über das Kommunikationsnetzwerk 2 (entweder direkt oder auch über eine weitere zwischengeschaltete Datenverarbeitungsvorrichtung, die zur Netzwerkkommunikation fähig ist) an die externe Datenverarbeitungsvorrichtung 5 gesendet. Ferner wird vorzugsweise wenigstens ein Aktor 4 verwendet, der auf physikalische Eigenschaften des technischen Systems 1 einwirken kann. Zudem wird insbesondere eine lokale Datenverarbeitungsvorrichtung 6 in einer Nähe des Aktors 4 verwendet, die Regelungs-Eingaben über das Kommunikationsnetzwerk 2 empfangen und beispielsweise in einem Speicher ablegen kann. Die lokale Datenverarbeitungsvorrichtung 6 aktualisiert insbesondere (z.B. mit der Periode *Tc*) einen aktuellen Wert zur Steuerung des wenigstens einen Aktors 4 in regelmäßigen Abständen, entweder mit der über das Kommunikationsnetzwerk 2 empfangenen Regelungs-Eingabe oder mit der vom Vorhersagemodell generierten erwarteten Regelungs-Eingabe. Die lokale Datenverarbeitungsvorrichtung 6 kann auch ausgebildet sein, mit der externen Datenverarbeitungsvorrichtung 5 zu kommunizieren. Die von dem technischen System 1 getrennte externe Datenverarbeitungsvorrichtung 5, kann über das Kommunikationsnetzwerk 2 mit dem Sensor 3 und der lokalen Datenverarbeitungsvorrichtung 6 kann. Die externe Datenverarbeitungsvorrichtung 5 führt vorzugsweise eine periodische Funktion (z.B. mit Periode *Tc*) aus, die eine Rückkopplungs-Regelung des technischen Systems 1 implementiert. Die externe Datenverarbeitungsvorrichtung 5 kann auch periodisch ein erneutes Training des Vorhersagemodells (z.B. mit Periode *TR*) ausführen und kann das Vorhersagemodell über das Kommunikationsnetzwerk 2 an die lokale Datenverarbeitungsvorrichtung 6 senden.

Im Rahmen der Erfindung können folgende Annahmen getroffen werden: Die Regelung wird vorzugsweise mit einer Periode *Tc* ≥ *Ts* abgetastet und die Periode für das erneute Training des Vorhersagemodells ist vorzugsweise *TR* ≥ *Tc* . Die Verzögerung, die die Regelkette erfährt (insbesondere Sensordaten zur externen Datenverarbeitungsvorrichtung 5 und zurück zur lokalen Datenverarbeitungsvorrichtung 6), ist insbesondere unbekannt und kann zeitlich veränderlich sein, wobei ein Minimalwert insbesondere kürzer oder gleich *Tc* und ein Maximalwert insbesondere größer als *Tc* ist. Die externe Datenverarbeitungsvorrichtung 5 implementiert insbesondere eine stabilisierende Regelungsfunktion, die als Eingabe die von der lokalen Datenverarbeitungsvorrichtung 6 gesendeten Sensordaten (und optional interne Zustände), die insbesondere zunächst am Sensor 3 anliegen, verwendet und als Ausgabe eine Regelungs-Eingabe für den wenigstens einen Aktor 4 des technischen Systems 1 erzeugt. Der in der externen Datenverarbeitungsvorrichtung 5 ausgeführte Regler stabilisiert insbesondere unter der Annahme, dass die Regelungs-Eingaben dem wenigstens einen Aktor 4 periodisch mit der Periode *Tc* und einer Verzögerung von höchstens *Tc* zugeführt werden. Die externe Datenverarbeitungsvorrichtung 5 verfügt vorzugsweise über ausreichende Rechenkapazitäten und Speicherplatz für das erneute Trainieren des Vorhersagemodells. Es kann Sequenzen von *N* Regelungs-Eingaben speichern, optional auch entsprechende Sensordaten und Verzögerungsmessungen. Die lokale Datenverarbeitungsvorrichtung 6 verfügt insbesondere über ausreichende Rechenleistung und Speicherplatz, um eine Kopie des Vorhersagemodells zu speichern und innerhalb eines Zyklus von *Tc* Zeiteinheiten auszuführen. Die lokale Datenverarbeitungsvorrichtung 6 kann die letzten *N* Regelungs-Eingaben speichern (optional auch die entsprechenden Sensordaten und Verzögerungsmessungen). Beispielhafte Werte könnten z. B. *N* = 5 oder *N* = 10 sein. Optional kann die lokale Datenverarbeitungsvorrichtung 6 Nachrichten an die externe Datenverarbeitungsvorrichtung 5 zurücksenden, z. B. Verzögerungsmessungen und/oder andere Informationen zu einem Aktor-Status.

Das lernbasierte Aktor-Verhalten gemäß der Erfindung verwendet beispielsweise die folgenden Komponenten: Ein Vorhersagemodell, das auf der lokalen Datenverarbeitungsvorrichtung 6 ausgeführt wird und die erwartete Regelungs-Eingabe für den nächsten Zeitschritt erzeugt. Ein Mechanismus zur Datenerfassung sowohl auf der lokalen Datenverarbeitungsvorrichtung 6 als auch auf der externen Datenverarbeitungsvorrichtung 5, die als Eingabe für das Vorhersagemodell dienen können. Ein Timeout-Mechanismus auf der lokalen Datenverarbeitungsvorrichtung 6, der entscheiden kann, wann die erwartete Regelungs-Eingabe verwendet werden soll. Ein Mechanismus zum erneuten Trainieren des Vorhersagemodells auf der externen Datenverarbeitungsvorrichtung 5, der das Vorhersagemodell zur Laufzeit aktualisiert. Ein Auslösemechanismus für das erneute Trainieren, der sowohl von der externen Datenverarbeitungsvorrichtung 5 als auch von der lokalen Datenverarbeitungsvorrichtung 6 gesteuert werden kann.

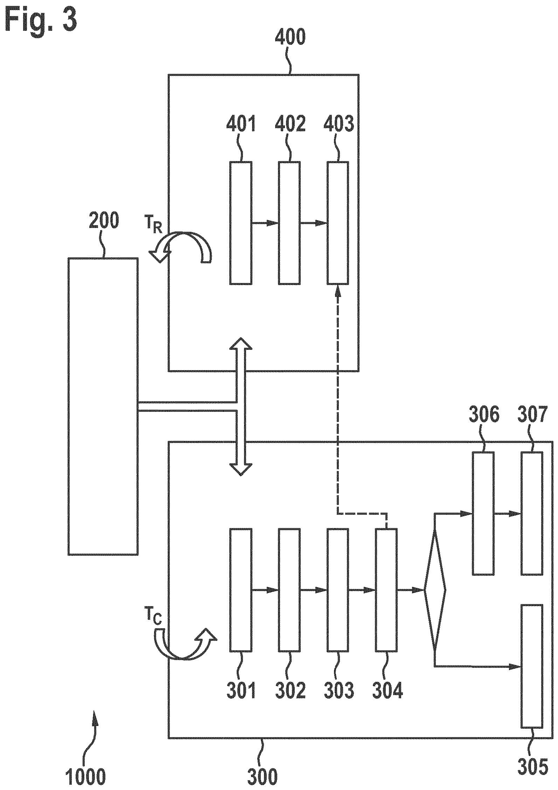

Ein Ausführungsbeispiel für ein Verfahren 1000 gemäß der Erfindung kann beispielsweise die folgenden Schritte umfassen (vgl. Fig. 3): Gemäß einem ersten Schritt 200 kann eine Initialisierung erfolgen. Dabei kann auf Basis eines Trainingsdatensatzes ein Vorhersagemodell generiert/trainiert werden, das eine Sammlung von *N* Regelungs-Eingaben umfassen kann (optional auch entsprechende Sensordaten und Verzögerungsmessungen). Das Vorhersagemodell gibt vorzugsweise als Ausgabe eine für einen nächsten Zeitschritt erwartete Regelungs-Eingabe aus, d. h. als *N* + 1-tes Element, das an den Eingangsvektor angehängt werden kann. Das Vorhersagemodell wird vorzugsweise sowohl in der externen Datenverarbeitungsvorrichtung 5 (insbesondere für das erneute Training) als auch in der lokalen Datenverarbeitungsvorrichtung 6 (zur Verwendung) gespeichert.

Gemäß einem weiteren Schritt, bzw. Unterverfahren, 300 wird insbesondere eine zyklische Regelung mit einer Periode *Tc* durchgeführt. Dabei werden gemäß Schritt 301 Sensordaten des wenigstens einen Sensors 3 über das Kommunikationsnetzwerk 2 an die externe Datenverarbeitungsvorrichtung 5 gesendet. Gemäß Schritt 302 wird durch die externe Datenverarbeitungsvorrichtung 5 eine Regelungsfunktion auf Basis der empfangenen Sensordaten ausgeführt. Dabei werden insbesondere internen Zustände (falls vorhanden) aktualisiert und eine generierte Regelungs-Eingabe im Speicher gespeichert. Eine Kopie der generierten Regelungs-Eingabe wird vorzugsweise über das Kommunikationsnetzwerk 2 an die lokale Datenverarbeitungsvorrichtung 6 gesendet. Gemäß Schritt 304 wird durch die lokale Datenverarbeitungsvorrichtung 6 das Vorhersagemodell ausgeführt, um eine erwartete Regelungs-Eingabe für die aktuelle Iteration zu generieren. Wenn die lokale Datenverarbeitungsvorrichtung 6 die Regelungs-Eingabe von der externen Datenverarbeitungsvorrichtung 5 innerhalb einer definierten Zeitspanne (Timeout-Zeit) von *Tc* Zeiteinheiten empfängt, wird diese gemäß Schritt 305 auf den wenigstens einen Aktor 4 angewendet. Andernfalls wird vorzugsweise gemäß Schritt 306 die mit dem Vorhersagemodell generierte erwartete Regelungs-Eingabe angewendet.

Gemäß Schritt 304 wird ferner die Regelungs-Eingabe der externen Datenverarbeitungsvorrichtung 5 mit der erwarteten Regelungs-Eingabe verglichen. Wenn der Vergleich über *M* aufeinanderfolgende Zyklen hinweg einen Schwellenwert überschreitet (z. B. durch Verwendung einer 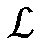 2-Norm, die insbesondere ein Maß für eine Differenz zwischen der tatsächlichen und der erwarteten Regelungs-Eingabe ist, oder einer Lyapunov-basierten Auslösebedingung), wird die externe Datenverarbeitungsvorrichtung 5 vorzugsweise veranlasst, eine aktualisierte Version des Vorhersagemodells an die lokale Datenverarbeitungsvorrichtung 6 zu senden. Optional kann gemäß Schritt 307 vorgesehen sein, dass, wenn die Verzögerung als Eingabe für das Vorhersagemodell benötigt wird, die lokale Datenverarbeitungsvorrichtung 6 die Verzögerung der Regelkette misst. Dies kann z. B. durch eine Zeitstempelung und eine Synchronisierung zwischen Sensor(en) 3 und der lokalen Datenverarbeitungsvorrichtung 6 erfolgen. Die Verzögerungsmessung kann dann an die externe Datenverarbeitungsvorrichtung 5 zurückgesendet werden.

Ferner kann ein zyklisches erneutes Training gemäß Schritt, bzw. Unterverfahren, 400, insbesondere mit einer Periode *TR* vorgesehen sein. Gemäß Schritt 401 aktualisiert dabei die externe Datenverarbeitungsvorrichtung 5 einen Trainingsdatensatz, sodass dieser Sequenzen von neuesten Regelungs-Eingaben umfasst, optional auch entsprechende Sensordaten und Verzögerungsmessungen. Gemäß Schritt 402 trainiert die externe Datenverarbeitungsvorrichtung 5 das Vorhersagemodell mit dem aktualisierten Trainingsdatensatz erneut. Gemäß Schritt 403 prüft die externe Datenverarbeitungsvorrichtung 5, ob es von der lokalen Datenverarbeitungsvorrichtung 6 einen Auslöser zum Senden des aktualisierten Vorhersagemodells erhalten hat. Wenn dies der Fall ist, kann die externe Datenverarbeitungsvorrichtung 5 das Vorhersagemodell sofort aktualisieren und/oder an die lokale Datenverarbeitungsvorrichtung 6 senden. Andernfalls wartet die externe Datenverarbeitungsvorrichtung 5 vorzugsweise bis zum Ende des periodischen Zyklus von *TR* Zeiteinheiten, bis die externe Datenverarbeitungsvorrichtung 5 das Vorhersagemodell aktualisiert und/oder an die lokale Datenverarbeitungsvorrichtung 6 sendet.

Die Erfindung steht insbesondere im Zusammenhang mit vernetzten Regelungssystemen. Die Erfindung kann ein breites Spektrum von Anwendungen abdecken, von softwaredefinierten Fahrzeugen über eine Prozess-Regelung bis hin zu einer Edge- und Cloud-Automatisierung.

Die Vorteile der Erfindung werden nachstehend anhand eines einfachen Beispiels eines technischen Systems 1 veranschaulicht, das als Doppelintegratorsystem mit additivem Gaußschen Rauschen modelliert ist und von einer externen Datenverarbeitungsvorrichtung 5 gesteuert wird, das über ein drahtloses Kommunikationsnetzwerk 2 kommuniziert. Während der Entwurfsphase wird insbesondere ein anfänglicher funktionsfähiger Kommunikationsnetzwerkzustand berücksichtigt, sodass das technische System 1 ohne verzögerte oder verlorene Kommunikation gesteuert, bzw. geregelt, werden kann. Dieser Schritt stellt beispielsweise sicher, dass die gesammelten Trainingsdaten für das lernbasierte Aktor-Verhalten nicht verfälscht werden, d. h., die k-te von der externen Datenverarbeitungsvorrichtung 5 berechnete Regelungs-Eingabe *uk* innerhalb des Zeitraums *t* ∈ [*tk*, *tk*+1] auf das technische System 1 angewendet wird. Hierbei kann beispielsweise ein einfaches autoregressives Vorhersagemodell mit zwei Verzögerungselementen als Beispiel für ein Vorhersagemodell gewählt werden. Beispielsweise könnte auf Basis von 1000 verrauschten Trainingsmustern trainiert werden.

Zunächst wird vorzugsweise unter der Annahme, dass kein Paketverlust und kein zusätzliches Rauschen für t=100 Zeitschritte auftritt, modelliert, was beispielsweise zu einer Referenzzustandsbahn x führt. Anschließend kann die Simulation 100 Mal mit einem hohen Paketverlust und Rauschen wiederholt werden, was auf einen Fehler im Kommunikationskanal hinweisen könnte.

Um die Leistungssteigerung der Erfindung zu veranschaulichen, kann das lernbasierte Aktor-Verhalten mit zwei klassischen Aktor-Verhalten verglichen werden: Die Nullstrategie, bei der eine aktuelle Regelungs-Eingabe einfach auf Null gesetzt wird, wenn ein Paket nicht rechtzeitig empfangen wird; die Halte-Strategie, bei der eine vorherige Regelungs-Eingabe konstant gehalten wird, bis ein neues Paket empfangen wurde. Die Strategie des lernbasierten Aktor-Verhaltens gemäß der Erfindung liefert dabei insbesondere ein deutlich kleineren Fehler gegenüber der Nullstrategie und der Halte-Strategie.

Die voranstehende Erläuterung der Ausführungsformen beschreibt die vorliegende Erfindung ausschließlich im Rahmen von Beispielen. Selbstverständlich können einzelne Merkmale der Ausführungsformen, sofern technisch sinnvoll, frei miteinander kombiniert werden, ohne den Rahmen der vorliegenden Erfindung zu verlassen.

## Patentansprüche

1. Verfahren (100) zum Regeln eines technischen Systems (1), umfassend:
- Bereitstellen (101) von Sensordaten, wobei die Sensordaten aus einer Erfassung wenigstens eines Sensors (3) des technischen Systems (1) resultieren,
- Initiieren (102) eines Durchführens einer Regelungsfunktion auf Basis der bereitgestellten Sensordaten, um eine Regelungs-Eingabe für einen nächsten Zeitschritt für wenigstens einen Aktor (4) des technischen Systems (1) zu bestimmen,
- Ermitteln (103) einer erwarteten Regelungs-Eingabe für den nächsten Zeitschritt für den wenigstens einen Aktor (4) des technischen Systems (1) auf Basis einer Korrelation zwischen vergangenen Sensordaten und korrespondierenden vergangenen Regelungs-Eingaben,
- Prüfen (104), ob die Regelungs-Eingabe innerhalb eines definierten Zeitfensters nach dem Initiieren (102) des Durchführens der Regelungsfunktion verfügbar ist,
wobei, im Falle, dass die Regelungs-Eingabe innerhalb des definierten Zeitfensters verfügbar ist, die Regelungs-Eingabe für eine Regelung des wenigstens einen Aktors (4) verwendet wird und im Falle, dass die Regelungs-Eingabe nicht innerhalb des definierten Zeitfensters verfügbar ist, die erwartete Regelungs-Eingabe für die Regelung des wenigstens einen Aktors (4) verwendet wird.

2. Verfahren (100) nach Anspruch 1,
**dadurch gekennzeichnet,**
**dass** das Ermitteln (103) durch ein Vorhersagemodell, insbesondere ein Maschinenlernmodell, durchgeführt wird und das Verfahren (100) ferner umfasst:
- Trainieren des Vorhersagemodells auf Basis eines Trainingsdatensatzes, wobei der Trainingsdatensatz die vergangenen Sensordaten und die korrespondierenden vergangenen Regelungs-Eingaben umfasst, wobei das Vorhersagemodell trainiert wird, um auf Basis von gegebenen Sensordaten eine entsprechende korrespondierende Regelungs-Eingabe für einen gegebenen nächsten Zeitschritt zu prädizieren.

3. Verfahren (100) nach einem der vorhergehenden Ansprüche, **dadurch gekennzeichnet,**
**dass** das Verfahren (100) ferner umfasst:
- Initiieren eines Speicherns der bereitgestellten Sensordaten und der bestimmten Regelungs-Eingabe,
- Initiieren eines Modifizierens des Vorhersagemodells auf Basis der gespeicherten Sensordaten und der gespeicherten Regelungs-Eingabe.

4. Verfahren (100) nach einem der vorhergehenden Ansprüche, **dadurch gekennzeichnet,**
**dass** das Bereitstellen (101) der Sensordaten, das Ermitteln (103) der erwarteten Regelungs-Eingabe, das Prüfen (104) und/oder das Verwenden der Regelungs-Eingabe für die Regelung des wenigstens einen Aktors (4) durch eine lokale Datenverarbeitungsvorrichtung (6) des technischen Systems (1) durchgeführt werden,
wobei das Durchführen der Regelungsfunktion, und vorzugsweise ferner das Trainieren des Vorhersagemodells, das Speichern und/oder das Modifizieren, durch eine externe Datenverarbeitungsvorrichtung (5) durchgeführt wird,
wobei die lokale Datenverarbeitungsvorrichtung (6) und die externe Datenverarbeitungsvorrichtung (5) über ein Kommunikationsnetzwerk (2) miteinander in Kommunikation stehen, wobei auf der lokalen Datenverarbeitungsvorrichtung (6) und auf der externen Datenverarbeitungsvorrichtung (5) ein jeweiliges Vorhersagemodell verwendet wird.

5. Verfahren (100) nach Anspruch 4,
**dadurch gekennzeichnet,**
**dass** das Verfahren (100) ferner umfasst:
- Initiieren eines Aktualisierens des Vorhersagemodells auf der lokalen Datenverarbeitungsvorrichtung (6) auf Basis des Vorhersagemodells der externen Datenverarbeitungsvorrichtung (5), wobei das Aktualisieren periodisch nach einer jeweiligen definierten Zeitspanne initiiert wird.

6. Verfahren (100) nach Anspruch 4 oder 5,
**dadurch gekennzeichnet,**
**dass** das Verfahren (100) ferner umfasst:
- Vergleichen einer Differenz zwischen der Regelungs-Eingabe und der erwarteten Regelungs-Eingabe mit einem definierten Schwellwert,
- Initiieren eines Aktualisierens des Vorhersagemodells auf der lokalen Datenverarbeitungsvorrichtung (6) auf Basis des Vorhersagemodells der externen Datenverarbeitungsvorrichtung (5), wenn die Differenz größer als der definierte Schwellwert ist.

7. Verfahren (100) nach einem der vorhergehenden Ansprüche, **dadurch gekennzeichnet,**
**dass** das Verfahren (100) ferner umfasst:
- Ermitteln einer Verzögerung zwischen dem Initiieren (102) des Durchführens der Regelungsfunktion und einem Empfangen der bestimmten Regelungs-Eingabe,
wobei das Ermitteln der erwarteten Regelungs-Eingabe für den nächsten Zeitschritt für den wenigstens einen Aktor (4) des technischen Systems (1) unter Verwendung des Vorhersagemodells ferner auf Basis der ermittelten Verzögerung durchgeführt wird, wobei das Vorhersagemodell die erwartete Regelungs-Eingabe auf Basis einer Korrelation zwischen vergangenen Sensordaten, vergangenen Verzögerungen und korrespondierenden vergangenen Regelungs-Eingaben ermittelt.

8. Computerprogramm (20), umfassend Befehle, die bei der Ausführung des Computerprogramms (20) durch wenigstens einen Computer (10) diesen veranlassen, das Verfahren (100) nach einem der vorhergehenden Ansprüche auszuführen.

9. Vorrichtung (10) zur Datenverarbeitung, die eingerichtet ist, das Verfahren (100) nach einem der Ansprüche 1 bis 7 auszuführen.

10. Computerlesbares Speichermedium (15), umfassend Befehle, die bei der Ausführung durch wenigstens einen Computer (10) diesen veranlassen, die Schritte des Verfahrens (100) nach einem der Ansprüche 1 bis 7 auszuführen.
